# EUROPEAN PATENT SPECIFICATION

(11) **EP 1 537 764 B1**
(45) Date of publication and mention of the grant of the patent: **11.11.2009**
(21) Application number: 03794012.9
(22) Date of filing: 01.09.2003
(51) Int. Cl.: H05B 37/02

(54) **MASTER-SLAVE ORIENTED TWO-WAY RF WIRELESS LIGHTING CONTROL SYSTEM**
MASTER-SLAVE-ORIENTIERTES ZWEISEITIGES DRAHTLOSES HF-BELEUCHTUNGSSTEUERSYSTEM
SYSTEME DE COMMANDE D'ECLAIRAGE SANS FIL RF BIDIRECTIONNEL ORIENTE MAITRE-ESCLAVE

(30) Priority: 04.09.2002 US 408003 P; 07.02.2003 US 445960 P
(43) Date of publication of application: 08.06.2005
(73) Proprietor: Koninklijke Philips Electronics N.V., 5621 BA Eindhoven (NL)
(72) Inventor: LING, Wang, Briarcliff Manor, NY 10510-8001 (US)
(74) Representative: Bosma, Rudolphus Hubertus Antonius
(86) International application number: PCT/IB2003/003981
(87) International publication number: WO 2004/023849

(56) References cited:
- WO-A-01/35181
- US-A- 5 905 442
- US-B1- 6 174 073
- PATENT ABSTRACTS OF JAPAN vol. 1998, no. 10, 31 August 1998 (1998-08-31) & JP 10 126861 A (MATSUSHITA ELECTRIC WORKS LTD), 15 May 1998 (1998-05-15)

## Description

### BACKGROUND OF THE INVENTION

### 1. Field of the Invention

The present invention relates to a lighting control system, and particularly to a master-slave oriented two-way radio frequency (RF) lighting control system.

### 2. Description of the Related Art

Conventional building lighting systems, both residential and commercial, include numerous lighting units controlled by wall switches interconnected together by electrical wiring. Any changes and modifications to the lighting system are either constrained by the electrical wiring or require re-wiring of the lighting system. Conventional lighting system configurations are therefore inflexible and costly to modify.

Lighting system control configurations range from simple to complex. In one of the simplest control schemes, lights are turned on/off by dedicated wall switches located, typically, in the same room as the lights controlled by the wall mounted switches. Additionally, wall dimmers may be used to control (i.e., vary) the intensity of the lights. More complicated control functions such as grouping, preset lighting scenes, dimming " and lighting based on ambient light, occupancy, and other factors can be implemented to provide intelligent control of the building lighting system. Such intelligent lighting system control may be implemented using an open, proprietary, or a standard lighting control command set such as, for example, the industry-standard DALI (Digital Addressable Lighting Interface). However, retrofitting and/or modifying a lighting system for DALI requires extra control wires for connecting a control box to the lighting units' ballast. Also, the conventionally wired DALI system has the disadvantage of added installation cost and retrofit inflexibility.

In some lighting systems a remote control unit is used, for example, to provide user convenience in controlling the lights. In most of such lighting systems, the remote control communication is based on IR (infrared) technology. IR communication requires a line-of-sight between the IR linked devices and have a limited range based on certain output power limits. Accordingly, lighting systems relying on IR communication are suitable for simple control functions limited to small areas such as a single room within a building. To communicate using IR over a large area requires increased transmitting power and/or repeaters, both of which are a costly proposition.

RF technology has the advantages of flexibility and ease of installation. It can be used for both local control (one room) and wide area control (building wide). Currently there are some RF-based lighting control systems. U. S. Pat. No. 6,174,073 describes a lighting system including a plurality of lighting units each having an illumination element and an associated switch (i.e., control box) responsive to a RF (radio frequency) signal, and remote control switch units for transmitting RF signals to the lighting units. The '073 patent discloses a lighting system using one-way communication between the remote control units and the control box attached to conventional electronic analog ballasts. The signal transmitted from the remote control switch unit is received by the control circuitry of the light unit to control a switch between the mains power supply and the ballast. The remote control switch turns on/off and dims the lighting units by connecting/disconnecting the lighting to the power supply. The disclosed system may be used for retrofits to convert manually operated wall switches into remote/handheld wireless controlled switches. However, since communication in the '073 system is one-way, there is no data feed back from the ballast to the remote control unit.

Other lighting systems use a proprietary protocol for two-way RF communications between the remote control units and the luminaries. These systems also use additional circuitry outside of the luminary ballast, such as an actuator, as the communication interface for exchanging information with the remote control unit. The actuator, in response to the signal received from the remote control unit, outputs a variable signal for turning on/off and dimming the ballasts. Each ballast stores the IDs of their assigned, designated remote control units so that only lighting control commands issued from the assigned remote control units will be acknowledged and responded to. This type of lighting control system provides two-way communication yet it has the disadvantage of being vulnerable to the situation where a remote control is lost or inoperable. This type of lighting system requires an additional device and intervention for recovering control of the ballasts in the event the designated remote control unit(s) assigned to the ballasts is lost or inoperable.

US Patent No 5,905,442 discloses a network comprising an apparatus for controlling an electrical device. To repeater receives the radio frequency signal from the master unit and transmits the control information to the control device and receives the status information from the control device and transmits it to the master unit.

### SUMMARY OF THE INVENTION

It is an object of the present teachings to provide a lighting control system providing a two-way master-slave oriented communication lighting control network.

It is another object of the present teachings to provide such a lighting control network commnunicating via RF wireless links.

It is still another object of the present teachings to provide such a lighting control system that connect a plurality of local two-way communication lighting control networks to form a larger network.

In accordance with the present teachings, there is provided a method and apparatus for providing a lighting control network including a remote control unit having a RF signal transmitter and a RF receiver, and a plurality of lighting control units, each of the lighting control units having a RF signal transmitter, a RF receiver, and a lighting unit associated therewith, wherein the remote control unit and the plurality of lighting control units are configured in a master-slave oriented network, one of the plurality of lighting control units being configured as a local control master in the network and remaining lighting control units of the plurality of lighting units and the remote control units being configured as slaves in the network, and the plurality of lighting control units and the remote control unit communicating bi-directionally with each other via RF wireless links. The network further comprises means for selecting at least one of the remaining lighting control units as a back-up local controls master for replacing the local control master in case of failure The network may also include sensors for detecting an environmental or system parameter. Multiple instances of the local lighting control network may be interfaced together to form a building-wide network.

The above and other objects, advantages, and benefits of the present invention will be understood by reference to following detailed description and appended sheets of drawings.

### BRIEF DESCRIPTION OF THE DRAWINGS

The above set forth and other features of the present teachings are made more apparent in the ensuing Detailed Description of the Invention when read in conjunction with the attached Drawings, wherein:
FIG. 1A is an exemplary depiction of a lighting control network in accordance with the present invention;
FIG. 1B is an exemplary conceptual construct of the lighting control network of the present invention combining a general wireless communication protocol and a lighting-specific standard, in accordance with the present invention;
FIG. 2 is an exemplary depiction of a ballast of the lighting control system of FIG. 1A, in accordance with the teachings of the present invention;
FIG. 3 is an exemplary depiction of a sensor of the lighting control system of FIG.1A, in accordance with the teachings of the present invention; and
FIG. 4 is an exemplary depiction of a remote control of the lighting system of FIG. 1A, in accordance with the teachings of the present invention; and
FIG. 5 is an exemplary depiction of the lighting control network of the present invention configured in a mesh topology.

### DETAILED DESCRIPTION OF THE INVENTION

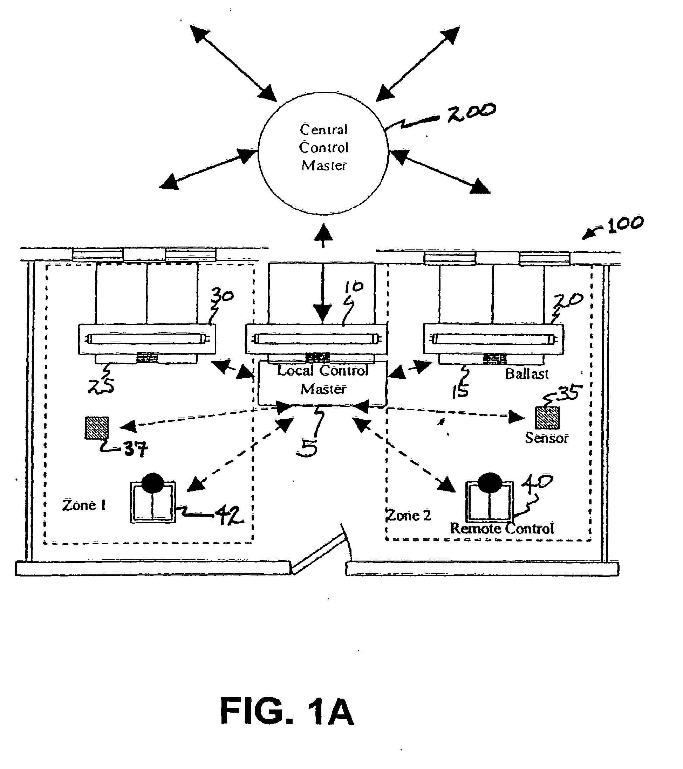

Referring to the figures, and in particular to FIG. 1A, there is depicted an exemplary representation of a lighting control network 100 in accordance with the teachings of the present invention. Note that while lighting control network 100 illustrates an exemplary deployment of the lighting control network of the present invention, it should be appreciated by those skilled in the art that the lighting control system of the present invention may be implemented and adapted to a variety of application environments.

In an aspect of the present invention, the lighting control system includes a master-slave oriented two-way (i.e., bi-directional) RF wireless lighting control network. Lighting control network 100 includes ballasts 5, 15, 25. Each of the ballasts has a lighting control unit and is associated with a lighting unit controlled thereby. As shown, ballast 5 is associated with lighting unit 10, ballast 15 is associated with lighting unit 20, and ballast 25 is associated with lighting unit 30. The lighting control network also includes at least one remote control unit for issuing commands for controlling the operation of the lighting units 10, 20, 30. Exemplary lighting control network 100 includes two remote control units 40 and 42. More or less remote control units may be included. For example, lighting control network 100 may optionally have one or three (or more) remote control units associated therewith.

Lighting control network 100 has sensors 35, 37 for detecting, i.e., sensing and monitoring the status of an environmental and/or system parameter. The particular parameter monitored may vary depending on the application of lighting control network 100.

The various ballasts, remote control units, and sensors of lighting control network 100 are associated with each other to form a communication and control network for controlling the operation of the lighting units 10, 20, 30 associated therewith. As mentioned above, the ballasts, remote control units, and sensors of lighting control network 100 are configured in a master-slave oriented network wherein one of the ballasts of the lighting control network 100 are designated as a local control master. Ballast 5 is the local control master for lighting control network 100. The remaining ballasts, namely ballasts 15, 25; sensors 35, 37; and remote control units 40, 42 are slave devices relative to the lighting control network 100 local control master, ballast 5.

In an aspect of the present invention, ballasts 5, 15, 25; sensors 35, 37; and remote control units 40, 42 communicate with each other via RF wireless links. The RF wireless links are represented in FIG. 1A as dashed lines. The double arrows on the dashed lines indicate that the communication between the devices of lighting control network 100 communicate bi-directionally. That is, the ballasts, sensors, and remote control units may each transmit and receive RF signals.

FIG. 1A also shows that local lighting control network 100 and other local lighting control networks may be wired or wirelessly connected to a central control master 200 to form a building-wide lighting control network (discussed in greater detail below), The building-wide network may thus comprise a two-tier hierarchy network of local control masters and a central control master.

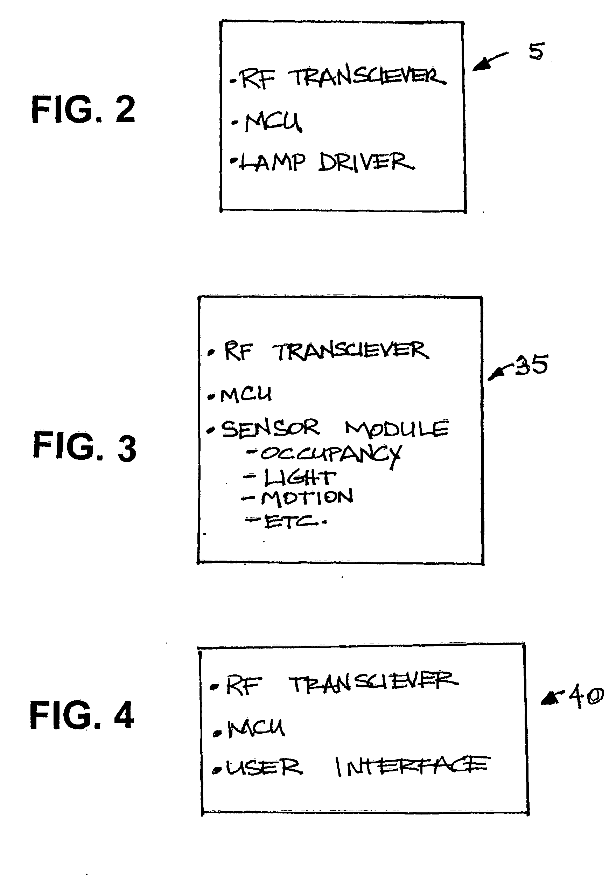

Referring to FIG. 2, an exemplary depiction of a ballast, including a lighting control unit, applicable for use in lighting control network 100 is shown. Ballast 5 of FIG. 1A is depicted as including a RF transceiver for transmitting and receiving RF signals, a MCU (microcontroller), and a lamp driver for driving lighting unit 10. The RF transceiver receives and demodulates the RF signals and passes the demodulated signal to the MCU. The MCU has program code encoded therein, including network communication protocol code and application code for addressing network communication issues and lighting unit control issues, respectively.

In an aspect of the present invention, the lighting control unit aspects of the invention are housed in a common housing with other lighting unit ballast circuitry. Thus, no additional wiring, either power or control, is required for implementing the ballasts disclosed herein.

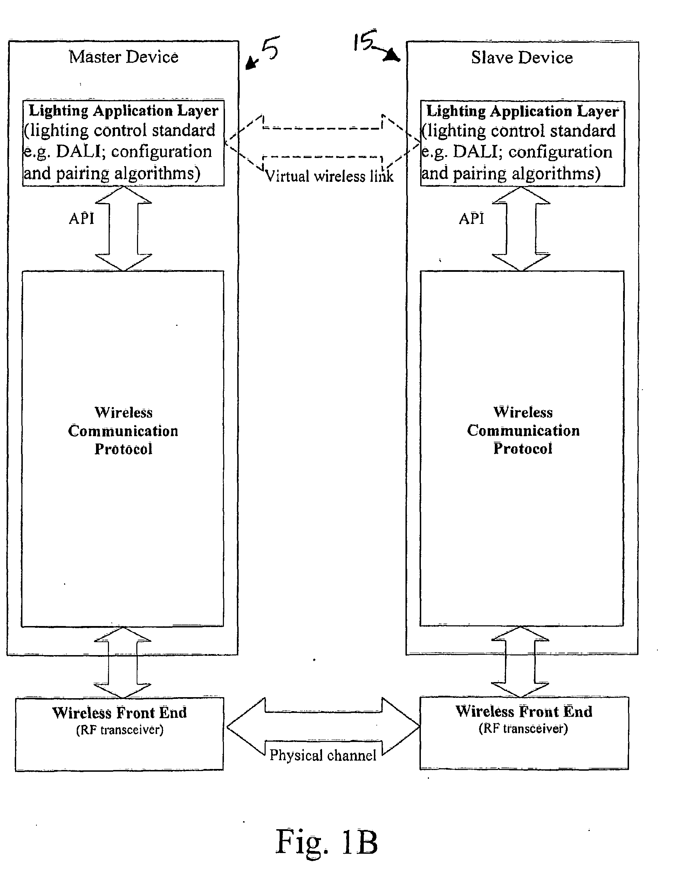

FIG. 1B illustrates the conceptual network construction aspect of the present invention. In particular, FIG. 1B shows the combination of a general wireless communication protocol (e.g., Zigbee) and a lighting-specific standard (e.g., DALI). The master has direct communication links with the slave devices such as the slave remote-control units, ballasts, and sensors. This direct (i.e., real/physical) communication link is implemented via a RF wireless link and is represented by the solid line double-arrow between RF transceivers of the local control master, ballast 5, and the slave device, ballast 15.

Regarding the network protocol for RF communication, it may be any RF wireless communication protocol, either proprietary or open-standard, for ensuring a master-slave oriented reliable two-way communication. Such a network protocol includes, but is not limited to Zigbee^{™}. Zigbee^{™} is a low cost, low power consumption, two-way, wireless communications standard proposed by the Zigbee Working group aimed initially at automation, toys, and PC peripherals. The lighting-specific standard (e.g., DALI)

In order to apply a lighting control standard originally designed for wired connections, such as DALI, to wireless controls the Zigbee^{™} communication protocol is used to ensure a reliable RF link. It should be appreciated that the selection and use of DALI and Zigbee^{™} in the embodiments discussed herein are only examples, not limitations, of the lighting control and communication protocols, respectively, encompassed by the present invention.

The RF transceiver receives and demodulates the RF signals and passes them to a microcontroller. The microcontroller is loaded with the embedded ballast software program, including the communications protocol module and the application module. The communications protocol module takes care of the network communication issues and the application module processes the API commands from communications protocol and controls the ballast with DALI commands.

FIG. 3 is an exemplary depiction of sensor 35 of lighting control network 100. Sensor 35 is shown as including a RF transceiver for transmitting and receiving RF signals, a MCU and a sensor module for detecting an environmental or system parameter. The particular type of sensor(s) included with sensor 35 may depend on the application and goals of lighting control network 100. Thus, the sensor module of sensor 35 may include, either alone or in combination, for example, an ambient light sensor, a motion sensor, an occupancy sensor, and a temperature sensor. Other types of environmental and system sensors may be substituted for and/or included in combination with the foregoing sensor types.

FIG. 4 provides an exemplary depiction of remote control 40 of lighting control network 100. Remote control 40 is shown as including a RF transceiver for transmitting and receiving RF signals, a MCU and an user interface. The user interface provides a means for a user to input commands for controlling the lighting units. The user interface preferably includes an interactive, graphical user interface that provides intuitive indications of the status of the controlled lighting units, system parameters, and input commands (e.g., accepted/rejected). In another aspect, the user interface may include electro-mechanical buttons and keys. Also, the remote control unit may be implemented using a dedicated or general purpose computing device (e.g., a PC and a PDA).

In each room, see zone 1 and zone 2 of FIG. 1A, the ballast located therein is controlled by one or more buttons (i.e., the user interface) located on the remote control unit associated with the ballast. Using the remote control unit, a user can remotely (i.e., not physically connected to) operate the lighting units, selectively group the lighting units in different configurations, set up various lighting scenes, etc.

Since the communication between the ballasts, sensors, and remote control units is bi-directional, the sensors can report data regarding the parameter(s) monitored, such as presence sensing, motion detection or ambient light detection, amount of power consumed, and other data to the local control master, ballast 5. The local control master may then adjust the outputs of lighting units 10, 20, 30 outputs according to the reported data and the lighting plan and other lighting objectives programmed into lighting control network 100. Local control master, ballast 5 acts as the network coordinator for lighting control network 100.

Regarding operation of lighting control network 100, the local control master, ballast 5, establishes its network with a network ID. The other ballasts 15, 25, remote controls 40, 42, and sensors 35, 37, acting as network slaves, join lighting control network 100, preferably using an enumeration algorithm. The enumeration algorithm preferably utilizes an address pre-programmed into the ballasts 15, 25, remote controls 40, 42, and sensors 35, 37 that uniquely identifies them. During the enumeration procedure, the ballasts 15, 25, remote controls 40, 42, and sensors 35, 37 receive the network ID of the local control master, ballast 5. The network ID of the local control master identifies the local network established by the local control master. Each of the ballasts 15, 25, remote controls 40, 42, and sensors 35, 37 also preferably receives an allocated short address to identify themselves in subsequent communications with the local control master, ballast 5.

A pairing algorithm is used to associate the keys/controls of the remote control units with particular ballasts, according to the lighting configuration and layout needs. For example, remote control unit 40 is "paired" with ballast 15 and remote control unit 42 is "paired" with ballast 25. In this manner, the ballasts of the present invention are "virtually wired" (since communicating via RF wireless links) to the keys/controls of the remote control units. The pairing procedure is preferably accomplished by placing the remote control units in a special programming mode, referred to herein as TEACH mode.

The local control master, ballast 5, records the pairing links between the keys/controls of the user interface of the remote control units and the ballasts paired together during the TEACH mode. The ballasts and remote control unit pairing relationships may be stored in a table and a relational database in a memory locution of the MCU of the local control master.

The pairing procedure is shown in the following Table 1.

**Table 1**

| ***Buttons pressed on Remote-control unit having two buttons*** | ***Reaction of Master*** | ***Reaction of Ballast*** |
|---|---|---|
| Both for 2 sec or more | Enter-TEACH-mode | all ON |
| Next/previous | Select active ballast (address +1/-1) | Active one OFF |
| Left/right button | Attach | back ON |
| Left/right for 2 sec or more | Detach | back ON |
| Both for 2 sec or more again | Return-to-NORMAL | all OFF and then ON |

As an example of an exemplary pairing algorithm in TEACH mode, the local control master first enters TEACH mode and sends a command to turn on all the registered ballasts. The networked ballasts are cycled through using, for example, "Next" and "Previous" buttons on the remote control unit. Depending on the button/key pressed on the remote-control unit, either "Next" or "Previous", one of the networked ballasts is selected. The active, i.e., selected, ballast is turned off to visually notify the user which ballast was selected, The selected ballast is then paired with a particular key of the remote control unit. A message is sent to the master, for example, to attach or detach the ballast to the network. Pairing data is stored in the master in a table or database. The selected ballast is turned back on after the pairing is complete. The user may select additional ballasts to "pair" to the remote control unit or return to the normal mode of lighting control operation.

In one aspect of the operation of light control network 100, the slave devices communicate with the local control master using RF signals generated therein. The RF signals include the network ID and the slave's ID. When the user issues a command by, for example, pressing a key on remote control unit 40 a specific data packet related to the pressed key (e.g., a command to turn on lighting unit 20) in the form of a RF signal is transmitted to the local control master, ballast 5. Upon receipt of the RF signal from remote control unit 40, local control master, ballast 5 retrieves the pairing data for remote control unit 40 and ballast 15 associated with the pressed key from its look-up table and routes the data packet via RF signal to destination ballast 15.

Destination ballast 15 receives the packet via RF signal, demodulates, and decodes the signal. Lighting unit 20 is operated in accordance to the issued command. In this example, lighting unit 20 is commanded to turn on.

According to another aspect of the present invention, the local control master sends out beacons or polling messages at a predetermined interval to maintain the health of light control network 100. In this manner the network slave devices are periodically informed of the local control master's status. The local control master status may include whether the local control master is allowing new devices to join the network. Additionally, the local control master can monitor the status of the slave devices on the network.

In yet another aspect of the present invention, lighting control network 100 can be maintained in the instance of a power outage and/or local control master, ballast 5, malfunctions or is otherwise rendered inoperable for coordinating the functions of network 100. Accordingly, at least one of the slave ballasts (for example, ballast 15) may be designated as a back-up local control master in the event that the local control master, ballast 5, fails. In the event of such failure, back-up local control master ballast 15 becomes the primary local control master. In another aspect hereof, all of the devices not designated as the master may act as a back-up master and be randomly selected as the master upon an emergency or failure of the primary local control master.

The designation of a primary, and a secondary, etc., back-up local control masters can be implemented according to a variety of network reconfiguration schemes. The particular algorithm used for converting a ballast into the new master may vary depending on the application and lighting control protocol used. It is noted however, that network 100 reconfigures as a master-slave oriented two-way communication network such that the pairing data is maintained by at least one device designated as a local control master.

Accordingly, lighting control network 100 of the present invention provides increased lighting system layout flexibility; reliable two-way communication, including feedback data from the ballast, such as power consumption or diagnostic information, affording improved lighting and power management; is not susceptible to the missing remote control unit situation since pairing link data is consolidated in the local control master. As discussed above, in the instance the master fails, there is a back-up local control master to take over the coordination and control functionality for the network.

In an aspect of the present invention, the existence of a local control master facilitates forming a building-wide lighting control network. The local control master can transmit data, communicate, local network data concerning the local network to a central master for the entire building to achieve "building automation" or a "building management" network.

This building-wide network connects all different kinds of the building management systems, such as lighting, heating, security and elevator systems, and so on together and forms communication pathways to the building management center, which can be a PC or other centralized control equipment such as central control master 200 of FIG. 1A. The devices included in this network include ballasts, remote control units, occupancy sensors, motion detectors, light sensors, temperature sensors, humidity sensors, window blind controllers, circuit breaker panel boxes, and any other type of sensors or devices that are may be used for the building control systems mentioned above.

In an aspect hereof, the devices in the network communicate in different ways depending on the communication protocol used. For instance, the communication protocol used may be a hierarchical net or a flat mesh.

In a hierarchical network structure, the central control master 200 is the top master of the network. In each room, there is a local master that can reside in the ballast or any other appropriate devices in the local network. The ballast is suitable for the system where the local master needs to be mains-powered. The local masters of the building network can talk to one each through communication links established therebetween. Network data and status is reported to the central control master by the local masters (e.g., ballast 5) and network commands and data can be sent to central control 200 via the same communication pathways. Local control masters control and coordinate the operations of the various devices in the local networks. The devices can talk to another through physical/virtual links after initialization or configuration. The communication between any two slave-devices can go through the local master.

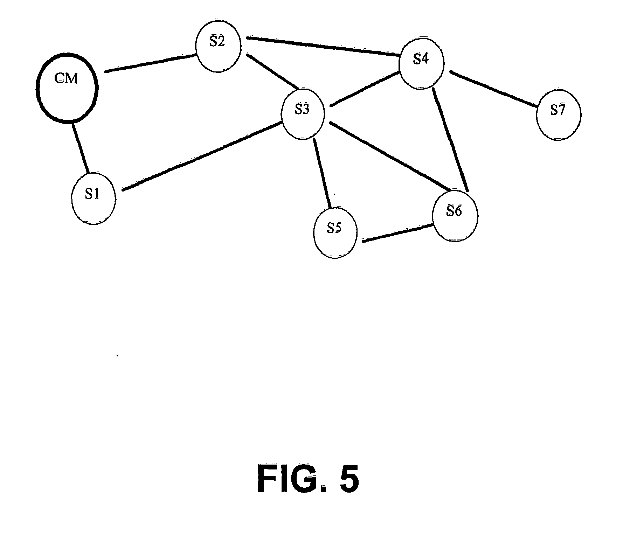

In a mesh network structure a shown in FIG. 5, central control master 200 is the master of the network. All the other devices can be the slaves s1, s2,..., s6. All of the slave devices, s1-s6, can communicate with one another. A command issued by the master will find the best route to get to the destination slave device by using other slave devices as routing or repeating devices. For example, a command destined for slave s6 may take route CM-s1-s3-s6 or route CM-s2-s4-s6, depending on network traffic and other considerations.

## Claims

1. A lighting control network (100), comprising:
a remote control unit (40,42) having a RF signal transmitter and a RF signal receiver; and
a plurality of lighting control units (5, 15, 25), each of said lighting control units having a RF signal transmitter, a RF signal receiver, and a lighting unit (10, 20, 30) associated therewith,
wherein said remote control unit and said plurality of lighting control units are configured in a master-slave oriented network, one of said plurality of lighting control units being configured as a local control master in said network, remaining lighting control units of said plurality of lighting units and said remote control unit being configured as slaves in said network-regarding said local control master, and said plurality of lighting control units and said remote control unit communicating bi-directionally with each other via a RF wireless link, **characterized in that** it further comprises means for selecting at least one of the remaining lighting control units as a back-up local control master for replacing the local control master in case of failure.

2. the lighting control network of claim 1, further comprising a sensor (35, 37) for sensing a parameter and transmitting a status of said parameter to said local control master.

3. The lighting control network of claim 2, wherein said sensor is selected from the group consisting of an ambient light sensor, a motion sensor, an occupancy sensor, a temperature sensor, and a combination thereof.

4. The lighting control network of claim 2, wherein said sensor communicates via a RF wireless link with said local control master.

5. The lighting control network of claim 2, wherein said local control master is one of said plurality of lighting control units and controls said lighting unit associated therewith in response to receiving said status of said parameter.

6. The lighting control network of claim 1, wherein a user interface control on said remote control unit is associated with at least one of said plurality of lighting control units.

7. The lighting control network of claim 1, wherein said slaves communicate directly with said local control master via RF wireless communication.

8. The lighting control network of claim 1, further comprising a central control master (200) for interfacing multiple instances of said lighting control network together.

9. The lighting control network of claim 1 wherein said network combines a RF communication protocol and a lighting control protocol.

10. A method for configuring a lighting control network (100), comprising:
configuring a remote control unit (40, 42) having a RF signal transmitter and a RF signal receiver and a plurality of lighting control units (5, 15, 25), each of said lighting control units having a RF signal transmitter, a RF signal receiver, and a lighting unit associated therewith, in a master-slave oriented network;
designating one of said plurality of lighting control units as a local control master in said network;
designating remaining lighting control units of said plurality of lighting units and said remote control unit as slaves in said network regarding said local control master; and
communicating bi-directionally between said plurality of lighting control units and said remote control unit via a RF wireless link,
further comprising selecting one of the remaining lighting control units as a back-up local control master for replacing the local control master in case of failure.

11. The method of claim 10, wherein the back-up local control master is selected at random among the remaining lighting control units.

12. The method of claim 10, further comprising associating a sensor (35, 37) for sensing a parameter and transmitting a status of said parameter to said local control master with at least one of said plurality of lighting control units.

13. The method of claim 12, wherein said sensor is selected from the group consisting of: an ambient light sensor, a motion sensor, an occupancy sensor, a temperature sensor, and a combination thereof.

14. The method of claim 12, further comprising said sensor communicating via a RF wireless link with said local control master.

15. The method of claim 12, comprising one of said plurality of lighting control units configured as said local control master and controlling said lighting unit associated therewith in response to receiving said status of said parameter.

16. The method of claim 10, further comprising associating a user interface control on said remote control unit with at least one of said plurality of lighting control units.

17. The method of claim 10, further comprising said slaves communicating directly with said local control master via RF wireless communication.

18. The method of claim 10, further comprising interfacing multiple instances of said lighting control network together through a central control master (200).

19. The method of claim 10, wherein said network combines a RF communication protocol and a lighting control protocol.

## Patentansprüche

1. Beleuchtungssteuernetzwerk (100) mit:
- einer Femsteuereinheit (40, 42) mit einem HF-Signalsender und einem HF-Signalempfänger; sowie
- einer Mehrzahl von Beleuchtungssteuereinheiten (5, 15, 25), wobei jede der Beleuchtungssteuereinheiten einen HF-Signalsender, einen HF-Signalempfänger und eine diesen zugeordnete Beleuchtungseinheit (10, 20, 30) aufweist,
wobei die Femsteuereinheit und die Mehrzahl von Beleuchtungssteuereinheiten in einem Master-Slave-orientierten Netzwerk konfiguriert sind, eine der Mehrzahl von Beleuchtungssteuereinheiten in dem Netzwerk als ein Master zur lokalen Steuerung konfiguriert ist, verbleibende Beleuchtungssteuereinheiten der Mehrzahl von Beleuchtungseinheiten und die Femsteuereinheit in Bezug auf den Master zur lokalen Steuerung in dem Netzwerk als Slaves konfiguriert sind und die Mehrzahl von Beleuchtungssteuereinheiten und die Femsteuereinheit über eine drahtlose HF-Verbindung miteinander bidirektional kommunizieren, **dadurch gekennzeichnet, dass** dieses weiterhin Mittel umfasst, um mindestens eine der verbleibenden Beleuchtungssteuereinheiten als einen Backup-Master zur lokalen Steuerung auszuwählen, um den Master zur lokalen Steuerung im Falle eines Ausfalls zu ersetzen.

2. Beleuchtungssteuernetzwerk nach Anspruch 1, welches weiterhin einen Sensor (35, 37) zum Abtasten eines Parameters und Übertragen eines Status des Parameters zu dem Master zur lokalen Steuerung umfasst.

3. Beleuchtungssteuernetzwerk nach Anspruch 2, wobei der Sensor aus der Gruppe, bestehend aus einem Umgebungslichtsensor, einem Bewegungssensor, einem Belegungssensor, einem Temperatursensor und einer Kombination daraus, ausgewählt wird.

4. Beleuchtungssteuernetzwerk nach Anspruch 2, wobei der Sensor mit dem Master zur lokalen Steuerung über eine drahtlose HF-Verbindung kommuniziert.

5. Beleuchtungssteuernetzwerk nach Anspruch 2, wobei der Master zur lokalen Steuerung eine der Mehrzahl von Beleuchtungssteuereinheiten darstellt und die diesem zugeordnete Beleuchtungseinheit in Reaktion auf den Empfang des Status des Parameters steuert.

6. Beleuchtungssteuernetzwerk nach Anspruch 1, wobei eine Bedienoberflächensteuerung auf der Femsteuereinheit mindestens einer der Mehrzahl von Beleuchtungssteuereinheiten zugeordnet ist.

7. Beleuchtungssteuernetzwerk nach Anspruch 1, wobei die Slaves durch drahtlose HF-Kommunikation unmittelbar mit dem Master zur lokalen Steuerung kommunizieren.

8. Beleuchtungssteuernetzwerk nach Anspruch 1, welches weiterhin einen Master (200) zur zentralen Steuerung umfasst, um mehrere Instanzen des Beleuchtungssteuernetzwerks miteinander zu verbinden.

9. Beleuchtungssteuernetzwerk nach Anspruch 1, wobei das Netzwerk ein HF-Kommunikationsprotokoll und ein Beleuchtungssteuerprotokoll verbindet.

10. Verfahren zur Konfiguration eines Beleuchtungssteuernetzwerks (100), welches die folgenden Schritte umfasst:
- Konfigurieren einer Femsteuereinheit (40, 42) mit einem HF-Signalsender und einem HF-Signalempfänger sowie einer Mehrzahl von Beleuchtungssteuereinheiten (5, 15" 25), wobei jede der Beleuchtungssteuereinheiten einen HF-Signalsender, einen HF-Signalempfänger und eine diesen zugeordnete Beleuchtungseinheit aufweist, in einem Master-Slave-orientierten Netzwerk;
- Festlegen von einer der Mehrzahl von Beleuchtungssteuereinheiten in dem Netzwerk als Master zur lokalen Steuerung;
- Festlegen der verbleibenden Beleuchtungssteuereinheiten der Mehrzahl von Beleuchtungseinheiten und der Femsteuereinheit in dem Netzwerk als Slaves in Bezug auf den Master zur lokalen Steuerung; sowie
- Bidirektionales Kommunizieren zwischen der Mehrzahl von Beleuchtungssteuereinheiten und der Femsteuereinheit über eine drahtlose HF-Verbindung, sowie weiterhin
- Auswählen einer der verbleibenden Beleuchtungssteuereinheiten als Backup-Master zur lokalen Steuerung, um den Master zur lokalen Steuerung im Falle eines Ausfalls zu ersetzen.

11. Verfahren nach Anspruch 10, wobei der Backup-Master zur lokalen Steuerung unter den verbleibenden Beleuchtungssteuereinheiten willkürlich ausgewählt wird.

12. Verfahren nach Anspruch 10, welches weiterhin den Schritt des Zuordnens eines Sensors (35, 37) zum Abtasten eines Parameters und Übertragen eines Status des Parameters zu dem Master zur lokalen Steuerung zu mindestens einer der Mehrzahl von Beleuchtungssteuereinheiten umfasst.

13. Verfahren nach Anspruch 12, wobei der Sensor aus der Gruppe, bestehend aus einem Umgebungslichtsensor, einem Bewegungssensor, einem Belegungssensor, einem Temperatursensor und einer Kombination daraus, ausgewählt wird.

14. Verfahren nach Anspruch 12, wonach weiterhin der Sensor mit dem Master zur lokalen Steuerung über eine drahtlose HF-Verbindung kommuniziert.

15. Verfahren nach Anspruch 12, wonach eine der Mehrzahl von Beleuchtungssteuereinheiten als Master zur lokalen Steuerung konfiguriert ist und die zugeordnete Beleuchtungseinheit in Reaktion auf den Empfang des Status des Parameters steuert.

16. V erfahren nach Anspruch 10, wonach weiterhin eine Bedienoberflächensteuerung auf der Femsteuereinheit mindestens einer der Mehrzahl von Beleuchtungssteuereinheiten zugeordnet ist.

17. Verfahren nach Anspruch 10, wonach weiterhin die Slaves durch drahtlose HF-Kommunikation unmittelbar mit dem Master zur lokalen Steuerung kommunizieren.

18. Verfahren nach Anspruch 10, wonach weiterhin mehrere Instanzen des Beleuchtungssteuernetzwerks durch einen Master (200) zur zentralen Steuerung miteinander verbunden werden.

19. Verfahren nach Anspruch 10, wonach das Netzwerk ein HF-Kommunikationsprotokoll und ein Beleuchtungssteuerprotokoll verbindet.

## Revendications

1. Réseau de commande d'éclairage (100), comprenant :
une unité de télécommande (40, 42) ayant un émetteur de signal RF et un récepteur de signal RF ; et
une pluralité d'unités de commande d'éclairage (5, 15, 25), chacune desdites unités de commande d'éclairage ayant un émetteur de signal RF, un récepteur de signal RF et une unité d'éclairage (10, 20, 30) qui lui est associée,
dans lequel ladite unité de télécommande et ladite pluralité d'unités de commande d'éclairage sont configurées dans un réseau orienté maître-esclave, l'une de ladite pluralité d'unités de commande d'éclairage étant configurée en tant que maître de commande local dans ledit réseau, les unités de commande d'éclairage restantes de ladite pluralité d'unités d'éclairage et ladite unité de télécommande étant configurées en tant qu'esclaves dans ledit réseau par rapport audit maître de commande local, et ladite pluralité d'unités de commande d'éclairage et ladite unité de télécommande communicant de manière bidirectionnelle entre elles par l'intermédiaire d'une liaison sans fil RF, **caractérisé en ce qu'**il comprend en outre des moyens pour sélectionner au moins l'une des unités de commande d'éclairage restantes en tant que maître de commande local de rechange pour remplacer le maître de commande local en cas de panne.

2. Réseau de commande d'éclairage selon la revendication 1, comprenant en outre un capteur (35, 37) pour détecter un paramètre et transmettre un statut dudit paramètre audit maître de commande local.

3. Réseau de commande d'éclairage selon la revendication 2, dans lequel ledit capteur est sélectionné dans le groupe se composant d'un capteur de lumière ambiante, d'un capteur de mouvement, d'un capteur d'occupation, d'un capteur de température et d'une combinaison de ceux-ci.

4. Réseau de commande d'éclairage selon la revendication 2, dans lequel ledit capteur communique par l'intermédiaire d'une liaison sans fil RF avec ledit maître de commande local.

5. Réseau de commande d'éclairage selon la revendication 2, dans lequel ledit maître de commande local est l'une de ladite pluralité d'unités de commande d'éclairage et commande ladite unité d'éclairage qui lui est associée en réponse à la réception dudit statut dudit paramètre.

6. Réseau de commande d'éclairage selon la revendication 1, dans lequel une commande d'interface utilisateur sur ladite unité de télécommande est associée à au moins l'une de ladite pluralité d'unités de commande d'éclairage.

7. Réseau de commande d'éclairage selon la revendication 1, dans lequel lesdits esclaves communiquent directement avec ledit maître de commande local par l'intermédiaire d'une communication sans fil RF.

8. Réseau de commande d'éclairage selon la revendication 1, comprenant en outre un maître de commande central (200) pour mettre en interface de multiples instances dudit réseau de commande d'éclairage entre elles.

9. Réseau de commande d'éclairage selon la revendication 1, dans lequel ledit réseau combine un protocole de communication RF et un protocole de commande d'éclairage.

10. Procédé de configuration d'un réseau de commande d'éclairage (100), comprenant les étapes consistant à :
configurer une unité de télécommande (40, 42) ayant un émetteur de signal RF et un récepteur de signal RF et une pluralité d'unités de commande d'éclairage (5, 15, 25), chacune desdites unités de commande d'éclairage ayant un émetteur de signal RF, un récepteur de signal RF et une unité d'éclairage qui lui est associée, dans un réseau orienté maître-esclave ;
désigner l'une de ladite pluralité d'unités de commande d'éclairage en tant que maître de commande local dans ledit réseau ;
désigner les unités de commande d'éclairage restantes de ladite pluralité d'unités d'éclairage et ladite unité de télécommande en tant qu'esclaves dans ledit réseau par rapport audit maître de commande local ; et
communiquer de manière bidirectionnelle entre ladite pluralité d'unités de commande d'éclairage et ladite unité de télécommande par l'intermédiaire d'une liaison sans fil RF,
comprenant en outre l'étape consistant à sélectionner l'une des unités de commande d'éclairage restantes en tant que maître de commande local de rechange pour remplacer le maître de commande local en cas de panne.

11. Procédé selon la revendication 10, dans lequel le maître de commande local de rechange est sélectionné de manière aléatoire parmi les unités de commande d'éclairage restantes.

12. Procédé selon la revendication 10, comprenant en outre l'étape consistant à associer un capteur (35, 37) pour détecter un paramètre et transmettre un statut dudit paramètre audit maître de commande local avec au moins l'une de ladite pluralité d'unités de commande d'éclairage.

13. Procédé selon la revendication 12, dans lequel ledit capteur est sélectionné dans le groupe se composant d'un capteur de lumière ambiante, d'un capteur de mouvement, d'un capteur d'occupation, d'un capteur de température et d'une combinaison de ceux-ci.

14. Procédé selon la revendication 12, comprenant en outre l'étape consistant à ce que ledit capteur communique par l'intermédiaire d'une liaison sans fil RF avec ledit maître de commande local.

15. Procédé selon la revendication 12, comprenant en outre l'étape consistant à configurer l'une de ladite pluralité d'unités de commande d'éclairage en tant que ledit maître de commande local et l'étape consistant à commander ladite unité d'éclairage qui lui est associée en réponse à la réception dudit statut dudit paramètre.

16. Procédé selon la revendication 10, comprenant en outre l'étape consistant à associer une commande d'interface utilisateur sur ladite unité de télécommande à au moins l'une de ladite pluralité d'unités de commande d'éclairage.

17. Procédé selon la revendication 10, comprenant en outre l'étape consistant à ce que lesdits esclaves communiquent directement avec ledit maître de commande local par l'intermédiaire d'une communication sans fil RF.

18. Procédé selon la revendication 10, comprenant en outre l'étape consistant à mettre en interface de multiples instances dudit réseau de commande d'éclairage entre elles par l'intermédiaire d'un maître de commande central (200).

19. Procédé selon la revendication 10, dans lequel ledit réseau combine un protocole de communication RF et un protocole de commande d'éclairage.
